# EUROPEAN PATENT SPECIFICATION

(11) **EP 1 753 328 B1**
(45) Date of publication and mention of the grant of the patent: **19.03.2008**
(21) Application number: 05732002.0
(22) Date of filing: 19.04.2005
(51) Int. Cl.: A47J 31/30, B65D 81/00

(54) **DEVICE FOR PRODUCING A BREW OF AN AROMATIC VEGETABLE SUBSTANCE AND CARTRIDGE CONTAINING SAID AROMATIC VEGETABLE SUBSTANCE**
VORRICHTUNG ZUR HERSTELLUNG EINER BRÜHE AUS EINER AROMATISCHEN GEMÜSESUBSTANZ UND PATRONE MIT DER AROMATISCHEN GEMÜSESUBSTANZ
DISPOSITIF DE PRODUCTION D'UNE INFUSION D'UNE SUBSTANCE VEGETALE AROMATIQUE ET CARTOUCHE CONTENANT LADITE SUBSTANCE VEGETALE AROMATIQUE

(30) Priority: 11.06.2004 IT MI20041175
(43) Date of publication of application: 21.02.2007
(73) Proprietor: De'Longhi SpA, 31100 Treviso (IT)
(72) Inventor: MARCONI, Gian Carlo, I-31057 Silea (IT)
(74) Representative: Rapisardi, Mariacristina
(86) International application number: PCT/EP2005/004141
(87) International publication number: WO 2005/120311

(56) References cited:
- WO-A-93/17932
- WO-A-03/056986
- WO-A-20/04002278
- FR-A- 2 041 380
- US-A- 2 685 248

## Description

The present invention refers to a device for producing a brew of an aromatic vegetable substance and to a cartridge containing said aromatic vegetable substance.

A device for producing a brew of coffee, in particular a traditional or electric percolator of the type comprising a boiler for producing boiling water, a funnel for housing coffee powder subjected to brewing by the boiling water sucked up from the boiler, and a recipient for the brewed coffee engaging with the boiler with the interposition of the funnel.

In such a traditional device the brewing chamber of the coffee powder is defined between a bottom filtering element applied inside the funnel and a top filtering element applied to the outside of the base of the recipient for the brew.

The hydraulic seal of the brewing chamber is ensured by a gasket in use squashed against the free edge of the side wall of the funnel.

Sometimes in this same structure, instead of loose coffee powder a cartridge with filtering walls containing coffee powder is positioned in the brewing chamber.

In any case, such a traditional device has a complex structure due essentially to the number of parts of which it consists, since it is necessary to apply a bottom filtering element in the funnel and a top filtering element on the outside of the base of the recipient in order to create the brewing chamber.

Moreover, the hydraulic seal of the brewing chamber is not perfectly ensured by the single sealing point against the free edge of the funnel made by the gasket.

WO-A-2004/002278 discloses a device according to preamble of claim 1.

The technical task proposed of the present invention is, therefore, that of making a device for producing a brew of an aromatic vegetable substance and a cartridge containing said aromatic vegetable substance that allow the aforementioned technical drawbacks of the prior art to be eliminated.

In this technical task a purpose of the invention is that of making a device for producing a brew of an aromatic vegetable substance and a cartridge containing said aromatic vegetable substance that allow a simplification in the structure and in the number of parts necessary for making the brewing chamber to be obtained.

Another purpose of the present invention is that of making a device for' producing a brew of an aromatic vegetable substance and a cartridge containing said aromatic vegetable substance that ensure an optimal hydraulic seal of the brewing chamber in use.

The .technical task, as well as these and other purposes, according to the present invention, are accomplished by making a device for producing a brew of an aromatic vegetable substance by means of brewing through a cartridge containing said aromatic vegetable substance, according to independent claim 1.

Other characteristics of the present invention are defined, moreover, in the other claims.

Further characteristics and advantages of the invention shall become clearer from the description of a preferred but not exclusive embodiment of the device and process for the preparation of a coffee-based drink according to the finding, where the device is illustrated for indicating and not limiting purposes in the attached drawings, in which:
- figure 1 shows a top side section view along the main axis of the device and of the cartridge according to a preferred embodiment of the finding; and

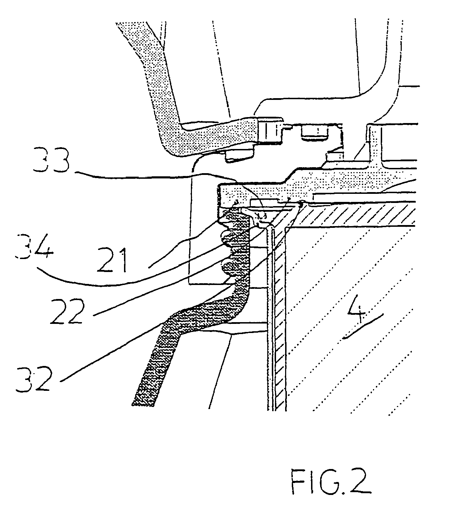

- figure 2 shows an enlargement of a detail of the device of figure 1.

With reference to the quoted figures, a device for preparing a brew of an aromatic vegetable substance is shown, wholly indicated with reference numeral 1.

The device 1 comprises a boiler 2 for producing boiling water, a funnel for housing a cartridge 4 containing the aromatic vegetable substance, through which flows boiling water for producing the brew, and a recipient 5 for the brew engaging with the boiler 2 with the interposition of the funnel 3.

The recipient 5 has a base 13 that extends with a flange 14 having a threading 15 for coupling with a counter threading 16 of the mouth of the boiler 2.

The base 13 of the recipient 5 carries a substantially tubular dispenser 17 that extends inside the recipient 5 and pours the brew produced into the recipient 5.

The dispenser 17 is in fluid communication with the boiler 2 through the funnel 3.

The funnel 3 lies inside the boiler 2 and has one open side facing towards the dispenser 17 and one side facing towards the boiler 2 equipped with a water suction path 18.

A closing lid 19 and an ergonomic handle 20 are applied once again to the recipient 5.

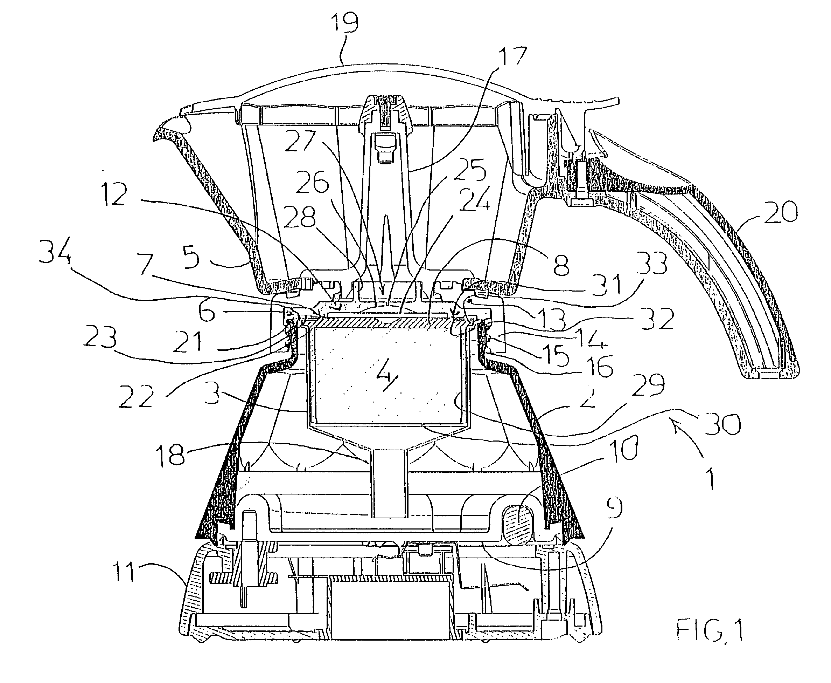

In particular, in figure 1 the device 1 consists of an electric percolator.

The electric percolator includes an electrical resistance 10 for heating the water contained in the boiler 2 in the base 9 of the boiler 2.

The illustrated electric percolator is suitable for producing a brew of coffee, tea, camomile or something else according to the content of the cartridge 4.

The electrical resistance 10 is supplied with power by the plate 11 on which the base 9 of the boiler 2 rests.

Advantageously, the device 1 has first hydraulic sealing means 6 with the funnel 3 and, distinct from the first hydraulic sealing means 6, second hydraulic sealing means 7 with the cartridge 4 able to be positioned perimetrically to the top filtering element 8 of the cartridge 4.

Preferably, as illustrated, the first hydraulic sealing means 6 and the second hydraulic sealing means 7 are formed in a single body from a gasket 12.

The gasket 12 is associated with the side of the base 13 of the recipient 5 facing towards the boiler 2

In particular, the first sealing means 6 comprise a first radially outer annular protrusion 21 projecting from the side of the gasket 12 facing towards the boiler 2, whereas the second sealing means 7 comprise a second radially distanced annular protrusion 22 inside the first protrusion 21 and also projecting from the side of the gasket 12 facing towards the boiler 2.

The body of the gasket 12 has a reduction in thickness 23 at least in the zone between the first protrusion 21 and the second protrusion 22. This substantially makes an articulation that increases the flexibility of the gasket at that point and consequently allows the first protrusion 21 to adapt against the free edge of the side wall of the boiler 2 and the second protrusion 22 to adapt against the outer surface of the top filtering wall 8 of the cartridge 4 practically independently from each other.

The first hydraulic sealing means 6 and the second hydraulic sealing means 7 have sealing points arranged on different levels with respect to the axis of the device 1.

In particular, the first protrusion 21 and the second protrusion 22 of the gasket 12 have a different height so as to make a first sealing point between the gasket 12 and the free edge of the side wall of the boiler 2 and a second sealing point between the gasket 12 and the top filtering wall 8 of the cartridge 4, arranged radially inside and higher up with respect to the first sealing point.

The gasket 12, at the side facing towards the boiler 2 and in the zone radially inside the second protrusion 22, defines an elastically yielding pressurisation chamber 24 of the brew, having at least one calibrated through hole 25 in communication with the dispenser 17 and suitable for accelerating the flow of the brew so as to promote the encapsulation of air and the overall frothing of the brew.

The wall of the pressurisation chamber 24 has a narrowing in thickness 26 around the through holes 25 suitable for promoting its elastic deformation.

The gasket 12 has sealing engagement means 27 with the dispenser 17.

The sealing engagement means 27 comprise a third annular protrusion 28 that projects from the side of the gasket 12 facing towards the recipient 5 and circumscribes the calibrated through hole 25.

The cartridge 4 comprises a plastic cylindrical body 29 closed by a bottom filtering element 30 and by the top filtering element 8.

The top filtering element 8, preferably also made from plastic, has a plurality of calibrated outlet holes (not shown).

The bottom filtering element 30, on the other hand, preferably consists of one or more paper filtering layers.

The top filtering element 8 has hydraulic sealing means 31 on its outside comprising an annular protrusion 32 circumscribing its calibrated outlet holes.

The hydraulic sealing means 31 of the top filtering element 8 of the cartridge 4 in use sealably engage with the second hydraulic sealing means 7.

In a possible different preferred embodiment the top filtering element 8 can also consist of one or more paper filtering layers in its portion radially inside the hydraulic sealing means 31.

Finally, the top filtering element 8 extends beyond the edge of the cylindrical body 30 with an annular flange 33 for resting against a counter-flange 34 of the free edge of the side wall of the funnel 3.

Advantageously, the annular flange 33 avoids the introduction of the cartridge 3 in the funnel 4 in upside-down position, because in this case it interferes with the counter-flange 34 before the cartridge 4 can be introduced in the funnel 3.

Advantageously, the flange 33 also rests directly against the counter-flange 34, whereas the bottom filtering element of the cartridge 4 is detached from the bottom of the funnel 3.

This always ensures the correct operation of the first and second hydraulic sealing means, also making it possible to have a certain tolerance in the design of the height of the cartridge 4 and/or of the funnel 3.

The device 1 can comprise a control unit (not shown) suitable for controlling, amongst other things, a system for detecting the lack of water in the boiler 2.

The system for detecting the lack of water in the boiler 2 emits an alarm signal when the time of electrical power supply to the resistance 10 that has passed until the first deactivation intervention of a thermostat (not shown) that controls the power supply of the electrical resistance 10 is less than or equal to a predetermined threshold value.

The control unit is able to command the start or interruption of the power supply to the electrical resistance 10 and also has timing means suitable for interrupting the electrical power supply of the electrical resistance 10 after a predetermined time limit from the production of the brew; in practice, when the brew is ready the electrical power supply is not interrupted, it is only interrupted after a certain time period so as to keep the drink hot.

The operation of the device is briefly the following.

The cartridge 4 is introduced into the funnel 3 and the funnel 3 is positioned in the boiler 2, and then the recipient 5 is associated with the boiler 2.

The water, which when boiling is sucked from the boiler 2 by the path 18, through the bottom filtering wall 30 of the cartridge 4, and percolates through the content of the cartridge 4 making the brew.

The brew comes out from the top filtering wall 8 of the cartridge 4, is pressurised in the pressurisation chamber 24 and is accelerated at the calibrated outlet hole 25 to increase the air content and therefore the froth.

The brew thus reaches the dispenser 17 and from here is finally poured into the recipient 5.

During the production of the brew the hydraulic seal of the device 1 is ensured in at least three points by the contact pressure between the first protrusion 21 of the gasket 12 and the free edge of the side wall of the boiler 2, between the second protrusion 22 of the gasket 12 and the protrusion 32 of the top filtering wall 8 of the cartridge 4, and between the third protrusion 28 of the gasket 12 and the dispenser 17. In the last case it must be noted that an increase in the pressure in the chamber 24 results in an increase in the contact pressure between the third protrusion 28 of the gasket 12 and the dispenser 17 and overall a better seal.

It should be noted that the structure of the device for preparing a brew disclosed by the present finding advantageously does not have filtering elements carried by the outside of the base of the recipient of the brew and/or by the inside of the funnel for housing the cartridge, since the filtration is carried out by the bottom and top filtering elements of the cartridge.

In practice, the materials used, as well as the sizes, can be whatever according to the requirements and the state of the art.

## Claims

1. Device (1) for preparing a brew of an aromatic vegetable substance by means of brewing through a cartridge(4) containing said aromatic vegetable substance, said device (1) comprising a boiler (2) for the production of boiling water, a funnel (3) for housing said cartridge through which flows said boiling water for the production of said brew, and a recipient (5) of said brew engaging with said boiler (2) with the interposition of said funnel (3), SAID DEVICE HAVING first hydraulic sealing means (6) with said funnel (3) and, distinct from said first hydraulic sealing means (6), second hydraulic sealing means (7) with said cartridge (4) able to be positioned perimetrically to the top filtering element (8) of said cartridge (4). **characterised in that** said first (6) and second (7) hydraulic sealing means are formed in a single body from a gasket (12).

2. Device according to claim 1, **characterised in that** said first (6) and second (7) hydraulic sealing means have sealing points arranged at different levels with respect to the axis of said device(1).

3. Device according to any one of the previous claims,
**characterised in that** it does not have filtering elements, with the filtering being carried out by bottom and top filtering elements of said cartridge(4).

4. Device according to any one of the previous claims, **characterised in that** said gasket (12) is associated with the side of the base (13) of said recipient (5) facing towards said boiler(2).

5. Device according to any one of the previous claims,
**characterised in that** said first sealing means (6) comprise a first radially outer annular protrusion (21) projecting from the side of said gasket (12) facing towards said boiler(2) and said SECOND sealing means (7) comprise a second radially distanced annular protrusion (22) inside said first protrusion (21) and projecting from the side of said gasket (12) facing towards said boiler(2).

6. Device according to any one of the previous claims,
**characterised in that** at least the body of said gasket (12) has a reduction in thickness(23) at least in the zone between said first (21) and second (22) protrusion.

7. Device according to any one of the previous claims,
**characterised in that** said first protrusion (21) and said second protrusion (22) have different heights.

8. Device according to any one of the previous claims,
**characterised in that** said gasket (12), at the side facing towards said boiler (2) and in the zone radially inside said second protrusionl(22), defines an elastically yielding pressurisation chamber (24) of said brew having at least one calibrated through hole (25) in communication with the dispenser(17) of said recipient and suitable for accelerating the flow of said brew so as to promote the encapsulation of air.

9. Device according to any one of the previous claims, **characterised in that** the wall of said chamber(24) has a narrowing in thickness (26) around said through hole(25).

10. Device according to any one of the previous claims,
**characterised in that** said gasket(12) has sealing engagement means (27) with dispenser (17) of said recipient.

11. Device according to any one of the previous claims,
**characterised in that** said sealing engagement means (27) comprise a third annular protrusion (28) projecting from the side of said gasket (12) facing towards said recipient (5), said third protrusion circumscribing said at least one calibrated through hole (25).

12. Device according to any one of the previous claims,
**characterised in that** it consists of an electric percolator.

13. Domestic appliance comprising a cartridge (4) containing an aromatic vegetable substance, said cartridge (4) comprising plastic cylindrical body (29) closed by a bottom filtering element (30) and by a top filtering element (8) having a plurality of calibrated outlet holes, and a device (1) for preparing a brew of an aromatic vegetable substance by means of brewing through said cartridge(4), said device(1) comprising a boiler(2) for the production of boiling water, a funnel (3) for housing said cartridge (4) through which flows said boiling water for the production of said brew, and a recipient (5) of said brew engaging with said boiler (2) with the interposition of said funnel(3), **characterised in that** said DEVICE (1) has first hydraulic sealing means(6) with said funnel(3) and, distinct from said first hydraulic sealing means (6), second hydraulic sealing means (7) with said cartridge(4) able to be positioned perimetrically to said top filtering element(8) of said cartridge(4) and **in that** said top filtering element (8) has, on the outside, hydraulic sealing means (31) comprising an annular projection (32) circumscribing said plurality of calibrated outlet holes and sealably engaged with said second hydraulic sealing means(7)

## Patentansprüche

1. Vorrichtung (1) für die Zubereitung einer Brühmischung von einer aromatischen pflanzlichen Substanz mittels Brühen durch eine Patrone (4), welche die besagte pflanzliche Substanz enthält, wobei die besagte Vorrichtung (1) einen Boiler (2) für die Herstellung von kochendem Wasser, einen Trichter (3) zur Aufnahme der besagten Patrone umfasst, durch welche das besagte kochende Wasser für die Herstellung der besagten Brühmischung fließt, sowie einen Behälter (5) für die besagte Brühmischung, welcher mit dem besagten Boiler (2) an der Zwischenschaltung des besagten Trichters (3) einrastet, wobei die besagte Vorrichtung erste hydraulische Dichtmittel (6) an dem besagten Trichter (3) sowie, von den besagten ersten hydraulischen Dichtmitteln (6) abgetrennt, zweite hydraulische Dichtmittel (7) an der besagten Patrone (4) besitzt, welche geeignet sind, perimetrisch zum oberen Filterelement (8) der besagten Patrone (4) angebracht zu werden, **dadurch gekennzeichnet, dass** die besagten ersten (6) und zweiten (7) Dichtmittel in einem einzelnen Körper aus einer Dichtung (12) gebildet werden.

2. Vorrichtung nach Anspruch 1, **dadurch gekennzeichnet, dass** die besagten ersten (6) und zweiten (7) hydraulischen Dichtmittel Dichtpunkte besitzen, welche auf unterschiedlichen Niveaus im Verhältnis zur Achse der besagten Vorrichtung (1) angeordnet sind.

3. Vorrichtung nach irgendeinem der vorherigen Ansprüche, **dadurch gekennzeichnet, dass** sie keine Filterelemente besitzt, wobei die Filterung mittels unterer und oberer Filterelemente der besagten Patrone (4) durchgeführt wird.

4. Vorrichtung nach irgendeinem der vorherigen Ansprüche, **dadurch gekennzeichnet, dass** die besagte Dichtung (12) mit der Seite der Basis (13) des besagten Behälters (5) verbunden ist, welche zum besagten Boiler (2) hin ausgerichtet ist.

5. Vorrichtung nach irgendeinem der vorherigen Ansprüche, **dadurch gekennzeichnet, dass** die besagten ersten Dichtmittel (6) einen ersten radialen äußeren ringförmigen Vorsprung (21) umfassen, welcher von jener Seite der besagten zum besagten Boiler (2) hin ausgerichteten Dichtung (12) hervorragt, und dass die besagten zweiten Dichtmittel (7) einen zweiten radial abstehenden ringförmigen Vorsprung (22) innerhalb des besagten ersten von jener Seite der besagten Dichtung (12) hervorragenden Vorsprungs (21) umfassen, welche zum besagten Boiler (2) hin ausgerichtet ist.

6. Vorrichtung nach irgendeinem der vorherigen Ansprüche, **dadurch gekennzeichnet, dass** mindestens der Körper der besagten Dichtung (12) mindestens im Bereich zwischen dem besagten ersten (21) und zweiten (22) Vorsprung eine Dickenreduzierung in der (23) besitzt.

7. Vorrichtung nach irgendeinem der vorherigen Ansprüche, **dadurch gekennzeichnet, dass** der besagte erste Vorsprung (21) und der besagte zweite Vorsprung (22) unterschiedliche Höhen besitzen.

8. Vorrichtung nach irgendeinem der vorherigen Ansprüche, **dadurch gekennzeichnet, dass** die besagte Dichtung (12) an der Seite, welche zum besagten Boiler (2) hin ausgerichtet ist, sowie im Bereich, der sich radial innerhalb des besagten zweiten Vorsprungs (22) befindet, eine elastisch nachgebende Druckkammer (24) der besagten Brühmischung bestimmt, welche mindestens ein kalibriertes Durchgangsloch (25) in Verbindung mit dem Spender (17) des besagten Behälters besitzt und dafür geeignet ist, den Fluss der besagten Brühmischung zu beschleunigen, um die Lufteinschließung zu steigern.

9. Vorrichtung nach irgendeinem der vorherigen Ansprüche, **dadurch gekennzeichnet, dass** die Wand der besagten Kammer (24) eine Dickenverringerung (26) um das besagte Durchgangsloch (25) besitzt.

10. Vorrichtung nach irgendeinem der vorherigen Ansprüche, **dadurch gekennzeichnet, dass** die besagte Dichtung (12) dichtende Einrastungsmittel (27) mit dem Spender (17) des besagten Behälters besitzt.

11. Vorrichtung nach irgendeinem der vorherigen Ansprüche, **dadurch gekennzeichnet, dass** die besagten dichtenden Einrastungsmittel (27) einen dritten Vorsprung (28) umfassen, welcher von jener zum besagten Behälter (5) ausgerichteten Seite der besagten Dichtung (12) hervorragt, wobei der besagte dritte Vorsprung das besagte mindestens eine kalibrierte Durchgangsloch (25) eingrenzt.

12. Vorrichtung nach irgendeinem der vorherigen Ansprüche, **dadurch gekennzeichnet, dass** sie aus einer elektrischen Kaffeemaschine besteht.

13. Haushaltsgerät, welches eine Patrone (4) umfasst, die eine aromatische pflanzliche Substanz enthält, wobei die besagte Patrone (4) einen zylindrischen Kunststoffkörper (29) umfasst, welcher durch ein unteres Filterelement (30) und durch ein oberes Filterelement (8) verschlossen wird, die eine Vielzahl an kalibrierten Durchgangslöchern besitzen, sowie eine Vorrichtung (1) für die Zubereitung einer Brühmischung mittels Brühen durch die besagte Patrone (4) von einer aromatischen pflanzlichen Substanz, wobei die besagte Vorrichtung (1) einen Boiler (2) für die Herstellung von kochendem Wasser, einen Trichter (3) zur Aufnahme der besagten Patrone (4) umfasst, durch welche das besagte kochende Wasser für die Herstellung der besagten Brühmischung fließt, sowie einen Behälter (5) für die besagte Brühmischung, welcher mit dem besagten Boiler (2) an der Zwischenschaltung des besagten Trichters (3) einrastet, **dadurch gekennzeichnet, dass** die besagte Vorrichtung (1) erste hydraulische Dichtmittel (6) an dem besagten Trichter (3) sowie, von den besagten ersten hydraulischen Dichtmitteln (6) abgetrennt, zweite hydraulische Dichtmittel (7) an der besagten Patrone (4) besitzt, welche geeignet sind, perimetrisch zum oberen Filterelement (8) der besagten Patrone (4) angebracht zu werden, sowie **dadurch**, dass das besagte obere Filterelement (8) auf der Außenseite hydraulische Dichtmittel (31) besitzt, welche einen ringförmigen Vorsprung (32) umfassen, der die besagte Vielzahl an kalibrierten Durchgangslöchern eingrenzt und verdichtend mit den besagten zweiten hydraulischen Dichtmitteln (7) einrastet.

## Revendications

1. Dispositif (1) pour préparer une tisane d'une substance végétale aromatique moyennant infusion par une cartouche (4) contenant ladite substance végétale aromatique, ledit dispositif (1) comportant un bouilleur (2) pour la production d'eau bouillante, un entonnoir (3) pour loger ladite cartouche par laquelle coule ladite eau bouillante pour la production de ladite tisane, et un récipient (5) de ladite tisane s'emboîtant avec ledit bouilleur (2) avec l'interposition dudit entonnoir (3), ledit dispositif ayant des premiers moyens de scellage hydraulique (6) avec ledit entonnoir (3) et, détaché des lesdits premiers moyens de scellage hydraulique (6), des seconds moyens de scellage hydraulique (7) avec ladite cartouche (4) en état d'être positionnée périmétriquement à l'élément de filtration supérieur (8) de ladite cartouche (4), **caractérisé en ce que** lesdits premiers (6) et seconds (7) moyens de scellage hydraulique sont formés dans un corps unique depuis un joint (12).

2. Dispositif selon la revendication 1, **caractérisé en ce que** lesdits premiers (6) et seconds (7) moyens de scellage hydraulique ont des points de scellage aménagés à des niveaux différents par rapport à l'axe dudit dispositif (1).

3. Dispositif selon l'une quelconque des revendications précédentes, **caractérisé en ce qu'**il n'a aucun élément de filtration, la filtration étant exécutée par les éléments de filtration inférieur et supérieur de ladite cartouche (4) susdite.

4. Dispositif selon l'une quelconque des revendications précédentes, **caractérisé en ce que** ledit joint (12) est associé au côté du support (13) dudit récipient (5) vis-à-vis dudit bouilleur (2).

5. Dispositif selon l'une quelconque des revendications précédentes, **caractérisé en ce que** lesdits premiers moyens de scellage (6) comportent une première protrusion annulaire radialement extérieure (21) saillant du côté dudit joint (12) vis-à-vis dudit bouilleur (2), et que lesdits seconds moyens de scellage (7) comportent une seconde protrusion annulaire radialement écartée (22) à l'intérieur de ladite première protrusion (21) et saillant du côté dudit joint (12) vis-à-vis dudit bouilleur (2).

6. Dispositif l'une quelconque des revendications précédentes, **caractérisé en ce qu'**au moins le corps dudit joint (12) a une réduction en termes d'épaisseur (23) au moins dans la zone entre lesdites première (21) et seconde (22) protrusions.

7. Dispositif l'une quelconque des revendications précédentes, **caractérisé en ce que** ladite première protrusion (21) et ladite seconde protrusion (22) ont des hauteurs différentes.

8. Dispositif l'une quelconque des revendications précédentes, **caractérisé en ce que** ledit joint (12) sur le côté vis-à-vis dudit bouilleur (2) et dans la zone radialement à l'intérieur de ladite seconde protrusion (22) définit une chambre de pressurisation s'affaissant élastiquement (24) de ladite tisane ayant au moins un orifice de passage étalonné (25) communiquant avec le distributeur (17) dudit récipient et apte à accélérer l'écoulement de ladite tisane de façon à stimuler l'encapsulation de l'air.

9. Dispositif selon l'une quelconque des revendications précédentes, **caractérisé en ce que** la paroi de ladite chambre (24) a un rétrécissement en termes d'épaisseur (26) autour dudit orifice de passage (25).

10. Dispositif selon l'une quelconque des revendications précédentes, **caractérisé en ce que** ledit joint (12) a des moyens d'emboîtement du scellage (27) avec le distributeur (17) dudit récipient.

11. Dispositif selon l'une quelconque des revendications précédentes, **caractérisé en ce que** lesdits moyens d'emboîtement de scellage (27) comportent une troisième protrusion annulaire (28) saillant du côté dudit joint (12) vis-à-vis dudit récipient (5), ladite troisième protrusion circonscrivant ledit au moins un orifice de passage étalonné (25).

12. Dispositif selon l'une quelconque des revendications précédentes, **caractérisé en ce qu'**il est constitué d'un percolateur électrique.

13. Appareil électroménager comportant une cartouche (4) contenant une substance végétale aromatique, ladite cartouche (4) comportant un corps cylindrique en plastique (29) fermé par un élément de filtration inférieur (30) et par un élément de filtration supérieur (8) ayant une pluralité d'orifices de sortie étalonnés, et un dispositif (1) pour préparer une tisane d'une substance végétale aromatique moyennant infusion par ladite cartouche (4), ledit dispositif (1) comportant un bouilleur (2) pour la production d'eau bouillante, un entonnoir (3) pour loger ladite cartouche (4) par laquelle coule ladite eau bouillante pour la production de ladite tisane, et un récipient (5) pour ladite tisane s'emboîtant avec ledit bouilleur (2) avec l'interposition dudit entonnoir (3), **caractérisé en ce que** ledit dispositif (1) a des premiers moyens de scellage hydraulique (6) avec ledit entonnoir (3) et, détaché desdits premiers moyens de scellage hydraulique (6), des seconds moyens de scellage hydraulique (7) avec ladite cartouche (4) en état d'être positionnée périmétriquement audit élément de filtration supérieur (8) de ladite cartouche (4), et **en ce que** ledit élément de filtration supérieur (8) a, à l'extérieur, des moyens de scellage hydraulique (31) comportant une saillie annulaire (32) circonscrivant ladite pluralité d'orifices de sortie étalonnés et emboîtés d'une façon scellable avec lesdits seconds moyens de scellage hydraulique (7).
